# EUROPEAN PATENT APPLICATION

(11) **EP 1 759 590 A2**
(43) Date of publication of application: **07.03.2007**
(21) Application number: 05018751.7
(22) Date of filing: 30.08.2005
(51) Int. Cl.: A23F 3/16, B65D 81/32, B65D 1/02, B65D 39/00, B65D 51/00, A47J 31/00, A23L 1/40, A23C 9/16

(54) **A process to prepare an instand food product and packaging to carry out the process**

(71) Applicant: NESTEC S.A., 1800 Vevey (CH)
(72) Inventor: Gustavsson, Martin, 8200 Schaffhausen (CH); Liebenspacher, Franz J., 78256 Steisslingen (DE); Peters, Andreas, 64625 Bensheim (DE); Duboc, Philippe, 8200 Schaffhausen (CH)
(74) Representative: Thomas, Alain

(57) **Abstract**

The invention concerns a packaging assembly , comprising a bottle and a cap for closing said bottle, wherein the bottle comprises a body and a neck with an external screwthread, the neck of the bottle being surrounded by a collar and wherein the cap comprises a base, an outer wall and an inner wall, said inner wall having a screwthread cooperating for the closure with the external screwthread of the neck, wherein the external screwthread of the neck has at least one discontinuity aligned along the height of the neck and containing a dehydrated foodstuff, a paste or a combination thereof.

## Description

The present invention concerns a process to prepare an instant food product and a packaging assembly to carry out the process.

The purpose of the present invention is to offer a solution to make a hot or cold instant food product in the pack itself, which is then ready to use. It is already known on the market to have a powder food product in a packaging, to add cold liquid to said powder, to shake said mixture to obtain a batter, which is ready to bake in a pan. With a mixture with cold liquid, there is no problem of overpressure by shaking the powder with the water. The objective of the present invention is to allow the consumer to prepare himself an instant food product with hot liquid without any risk of burning his hands or fingers by opening the assembly containing said ready to use product. It is also a problem to prepare a ready to use composition comprising a foam booster by mixing with cold liquid, due to the pressure increase taking into account the presence of the foam booster.

The present invention concerns a process to prepare an instant food product in a food packaging assembly,
- wherein a dehydrated foodstuff or a paste or a combination thereof in said food packaging assembly is mixed with a hot liquid or a cold liquid,
- said assembly is closed and shaked and
- wherein by opening said assembly, there is a pressure release with no splash of said instant food product.

The benefits for the consumer are following :
- There is no dirty dishes,
- It is easy to prepare, simply by adding hot or cold liquid, and it is quickly ready and finally
- there is no risk of overcooking or splashing.

The invention solves the problem of spilling when opening the packaging assembly, as the cold air heats up from the hot liquid during shaking, the air expands, thereby causing an overpressure in the packaging assembly. In the case of a sauce preparation, without the solution of the invention, the act of shaking leaves the inside of the cap covered with sauce. This sauce will splash out upon opening and stain and possibly burn the operator.

In the case of the preparation of a composition comprising a foam booster with a cold liquid, the pressure release is also causing a splash. This splash would stain the operator. This is avoided with the solution according to the invention.

The invention allows a safe and quick preparation of an instant food product. Accoding to the process of the invention, the hot liquid has a temperature comprised between 80 and 100 °C. The shaking is carried out during 10 seconds to 2 minutes. The hot liquid is filled in the packaging assembly so that 65 to 90 % of the space of the bottle is filled.

In the case of a reconstitution with cold liquid, the duration of shaking is the same as before and the liquid is at room temperature.

The liquid is preferably water or milk.

The present invention concerns further a packaging assembly to carry out the process of the invention, comprising a bottle and a cap for closing said bottle, wherein the bottle comprises a body and a neck with an external screwthread, the neck of the bottle being surrounded by a collar and wherein the cap comprises a base, an outer wall and an inner wall, said inner wall having a screwthread cooperating for the closure with the external screwthread of the neck, wherein the external screwthread of the neck has at least one discontinuity aligned along the height of the neck and containing a dehydrated foodstuff, a paste or a combination thereof.

The reason of the presence of the collar is that it shields the splash from the operator, when he is opening said packaging assembly.

According to a feature of the invention, the collar surrounds completely the neck or presents a full segmental opening. The reason is that during filling of hot water, the consumer might spill water in this collar which might then be an issue upon shaking. The solution to this is to drain the collar, which can be done by leaving a segmental opening in the collar. This segmental opening has an angle comprised between 110 to 60 °. Another solution is to have in the collar at least one hole, preferably 1 to 5 holes. The size of the holes is not critical.

According to the invention, the collar has a height lower or equal to the height of the neck. For the collar, a lower height is possible, like a flat circle.

The discontinuity in the screw is important, because it directs the splash, before the whole cap comes loose. Without this discontinuity, there is a risk that the cap fly like a Champagne bottle cap with product upon opening. The discontinuity of the screwthread on the neck is always facing away from the full segmental opening or from the holes of the collar. The number of discontinuities is not critical : it is normally comprised between 2 and 4. The width of these discontinuities is comprised between 1 and 3 mm.

The material of the bottle, the cap and the collar is not critical. This material is preferably taken from the group consisting of PP, HDPE, PEN, PET or laminates thereof. The microns.

As the bottle heats up upon filling with hot water, the bottle is fitted with an insulated label to shield the heat from the consumer hand. This insulated label is either a wraparound label or a shrinksleeve. Examples of such labels are expanded PS, PET, cardboard or paper. Best insulation is achieved also by having a bottle with ribbed or rough structure, that serves as an extra insulating air layer.

In the packaging assembly according to the invention, the dehydrated foodstuff or paste is taken from the group consisting of bouillons, soups, sauces, salad dressings, coffee, desserts, liquid doughs. In the case of a product developed using foam booster to yield a light texture of sauces, this foamer requires delicate instructions if used in cook-up sauces. If these instructions are not folowed, the foamer will degass without yielding the desired texture. In the assembly according to the invention, there is no more this problem, because the consumer has simply to mix the foam powder with hot water and the foamy sauce is ready to be used.

The following of the description is made in relation with the enclosed drawings, wherin
Figure 1 is a schematic drawing of the packaging assembly in the opened position and
Figure 2 is a schematic drawing of the packaging assembly in the closed position.

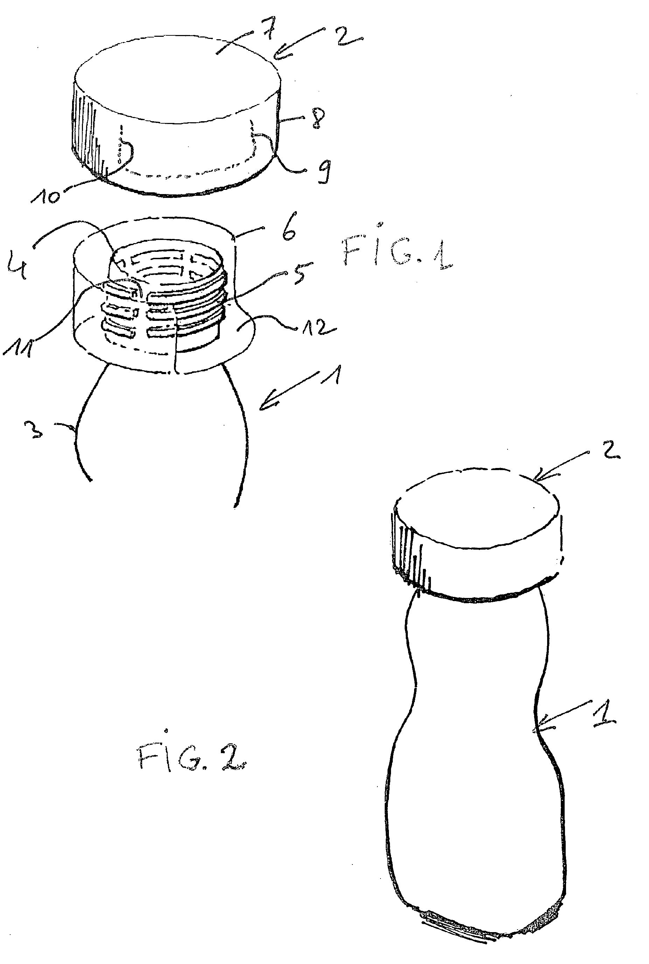

The packaging assembly according to the invention comprises a bottle (1) and a cap (2) for closing said bottle. The bottle comprises a body (3) and a neck (4) with an external screwthread (5), the neck (4) of the bottle (1) being surrounded by a collar (6) and wherein the cap (2) (9), said inner wall having a screwthread (10) cooperating for the closure with the external screwthread (5) of the neck, wherein the external screwthread of the neck has at least one discontinuity (11) aligned along the height of the neck and containing a dehydrated foodstuff, a paste or a combination thereof. The collar (6) comprises a full segmental opening (12) according to angle of 110 °.

When the consumer wants to use the food product, he opens the cap (2) of the bottle (1) containing the food powder. He then pours the hot water in the bottle (1) : the full segmental opening (11) drains the collar, if the consumer spills into the collar upon filling the bottle. He then recloses said bottle and shakes the mixture hot water with powder : due to the temperature of the water, a pressure increase builds up in the closed assembly. When the consumer opens the bottle, because of the presence of the discontinuities (11), the pressure inside the bottle drops and probably a certain quantity of the sauce product splashes at this place, but without any danger for the consumer, due to the presence of the collar (6). As seen on the figure , the discontinuities (11) are away from the segmental opening (12), so that the food product is retained in the collar (6).

According to the invention, the consumer has a food product ready to use, convenient to prepare and which can be directly poured on the meal.

The scope of use of the assembly can be envisaged everytime when a powdered , dough or sauce product has to be reconstituted with hot water or a foam booster composition has to be reconstituted with cold water.

## Claims

1. A process to prepare an instant food product in a food packaging assembly,
- wherein a dehydrated foodstuff or a paste or a combination thereof in said food packaging assembly is mixed with hot or cold liquid,
- said assembly is closed and shaked and
- wherein by opening said assembly, there is a pressure release with no splash of said instant food product.

2. A process according to claim 1, wherein the hot liquid has a temperature comprised between 80 and 100 °C.

3. A process according to any of claims 1 or 2, wherein the shaking is carried out during 10 seconds to 2 minutes.

4. A process according to any of claims 1 to 3, wherein the liquid is water or milk.

5. Packaging assembly to carry out the process according to any of claims 1 to 4, comprising a bottle and a cap for closing said bottle, wherein the bottle comprises a body and a neck with an external screwthread, the neck of the bottle being surrounded by a collar and wherein the cap comprises a base, an outer wall and an inner wall, said inner wall having a screwthread cooperating for the closure with the external screwthread of the neck, wherein the external screwthread of the neck has at least one discontinuity aligned along the height of the neck and containing a dehydrated foodstuff, a paste or a combination thereof.

6. Packaging assembly according to claim 5, wherein the collar surrounds completely the neck or presents a full segmental opening.

7. Packaging assembly according to claim 6, wherein the collar presents a full segmental opening according to an angle comprised between 110 to 60 °.

8. Packaging assembly according to claim 5, wherein the collar present at least one hole, preferably between 1 and 5 holes.

9. Packaging assembly according to any of claims 5 to 8, wherein the collar has a height lower or equal to the height of the neck.

10. Packaging assembly according to any of claim 6 to 8, wherein the discontinuity of the screwthread on the neck is always facing away from the full segmental opening or from the holes of the collar.

11. Packaging assembly according to any of claims 5 to 10, wherein it comprises 2 to 4 discontinuities.

12. Packaging assembly according to any of claims 5 to 11, wherein the width of the discontinuities is comprised between 1 and 3 mm.

13. Packaging assembly according to any of claims 5 to 12, wherein the material of the bottle, of the cap and of the collar is taken from the group consisting of PP, HDPE, PEN, PET or laminates thereof.

14. Packaging assembly according to any of claims 5 to 13, wherein the material of the bottle has a thickness comprised between 170 and 1000 microns.

15. Packaging assembly according to any of claims 5 to 14, wherein the body of the bottle comprises an insulating label, which is a shrinksleeve or a wraparound label.

16. Packaging assembly according to claim 15, wherein the insulating label is taken from the group consisting of expanded PS, PET, cardboard or paper.

17. Packaging assembly according to any of claims 5 to 16, wherein the bottle has a ribbed structure.

18. Packaging assembly according to any of claims 5 to 17, wherein the dehydrated foodstuff or paste is taken from the group consisting of bouillons, soups, sauces, salad dressings, coffee, desserts or liquid doughs.
